# EUROPEAN PATENT APPLICATION

(11) **EP 2 287 067 A2**
(43) Date of publication of application: **23.02.2011**
(21) Application number: 10167247.5
(22) Date of filing: 24.10.2008
(51) Int. Cl.: B62J 9/00, E05C 3/32, E05B 47/02

(54) **Two wheeler luggage with easy opening system and related locking means**

(30) Priority: 25.10.2007 IT PI20070116
(62) Divisional of application: 08841450.3
(71) Applicant: Taloco Investments N.V., Willemstad, Curacao (AN)
(72) Inventor: Ragbir, Sheila, Tobago (TT)
(74) Representative: Gritschneder, Martin

(57) **Abstract**

Locking means for trunks or bags for motorcycles, or similar vehicles comprise engage means (13) apt to couple a movable portion (12) of said trunk to a fixed portion (11), disengaging means apt to disengage said engage means and at least an electronic unit (31) apt to control the operation of said disengaging means.

## Description

### FIELD OF THE INVENTION

The present invention refers to a trunk, a tail bag, or a saddle bag for motorcycles, or similar vehicles, provided with auxiliary locking and opening means.

### DESCRIPTION OF THE PRIOR ART

Trunks for carrying various objects and accessories on motorcycles, or similar vehicles, comprise, as known, a fixed lower portion, which is bound to rear racks integral to the chassis of the vehicle, and a movable portion hinged to the lower portion, the two portion being kept closed by locking means, usually providing key means, arranged on the side opposite the hinge means side.

Saddle bags and tail bags as well comprise a fixed portion bound to the vehicle, a further portion hinged to the first portion and locking means.

The above trunks or bags are opened by acting upon said locking means in order to disengage engaging means apt to keep closed the two portions and then by lifting the movable portion which, mainly in trunks, tends by gravity to rest on the lower portion.

Then, the procedure implies the use of both hands by the user, one for operating the locking means and the other to lift and keep lifted the movable portion until he need accessing the internal room.

So, it can be understood the usefulness of trunks or bags provided with means apt to facilitate unlocking and lifting said movable portion and also apt to keep it lifted when the trunk or bag have to remain in open configuration.

In particular, about the unlocking procedure, patent application n° MI2006A001465 provides an electronic access control system whose effective working principle and operating modes can be advantageously used by and looking for solution apt to apply them to trunks or bags for motorcycles.

### SUMMARY OF THE INVENTION

Main object of the present invention is to propose a trunk or bag provided with means apt to facilitate opening and keeping it in open.

Further object of the present invention is to propose a free-hand opening trunk, or bag.

Another object of the present invention is to propose electronically operated auxiliary locking/opening means for trunks, or bags.

The above objects are achieved by a trunk, or bag, for motorcycles, or similar vehicles, of the type in which a movable portion is bound to a fixed portion through hinge means on one side and locking means at the opposite side, comprising elastic means placed between said fixed portion and said movable portion and apt to lift said movable portion when said locking means are disengaged and also apt to keep said movable portion lifted.

Advantageously said elastic means provide damping means for damping said lifting movement and reducing possible oscillations or vibrations, said elastic means preferably being air cylinders, hydraulic cylinders or other kind of visco-elastic means.

Advantageously the piston of said air cylinder is hinged to the fixed portion and the external cylinder is connected to the movable portion through a connection element hinged to the external cylinder and integral to said movable portion of the trunk, or bag.

A seat for housing, supporting or binding further elastic means is integral to one of the two portions of the trunk, said further elastic means acting between the two portion in order to produce, when said locking means are disengaged, a slight separation of said movable portion from said fixed portion through rotation about said hinge means. The above objects are also achieved by locking means for trunks or bags for motorcycles, or similar vehicles, comprising engage means apt to couple said movable portion to said fixed portion, disengaging means apt to disengage said engage means and at least an electronic unit apt to control the operation of said disengaging means.

The operation of said disengaging means occurs upon the execution of trunk an access right check procedure taking place when said electronic unit detects contacts of specific external entities with a determined portion of the external surface of said trunk, or bag, specifically when said electronic unit detects contacts with a plate arranged on the external surface of said trunk, contacts which are performed by a user wearing an electronic key, or when said electronic key is within a range of about 1 meter from said trunk.

Said locking means may also comprise a lock block acted by a key.

The locking means comprise an electric actuator apt to operate a cam, or different movable element, which acts upon said engage means to disengage them and said electric actuator is equipped with an encoder apt to determine the angular position of said cam that, advantageously is returned to its initial position a few second after being rotated to engage means disengaging position.

The advantages descending from the use of such devices are immediately clear both in respect of the great simplification of the trunk opening procedure allowing a simpler use of the trunk and with respect of the high level of reliability and safety of the devices themselves.

### BRIEF DESCRIPTION OF THE DRAWINGS

These and other advantages related to the present invention will be more easily understood by illustration of the non exhaustive example of the embodiment of the invention as described below by the drawings enclosed, wherein:
- Figure 1 shows a perspective view of a trunk according to the invention;
- Figure 2 shows a cross-sectional view of the trunk of fig.1, in trunk closed configuration, taken along a transversally centered vertical plane;
- Figure 3 shows a cross sectional view taken along line III-III of fig.2.

### DESCRIPTION OF PREFERRED EMBODIMENTS

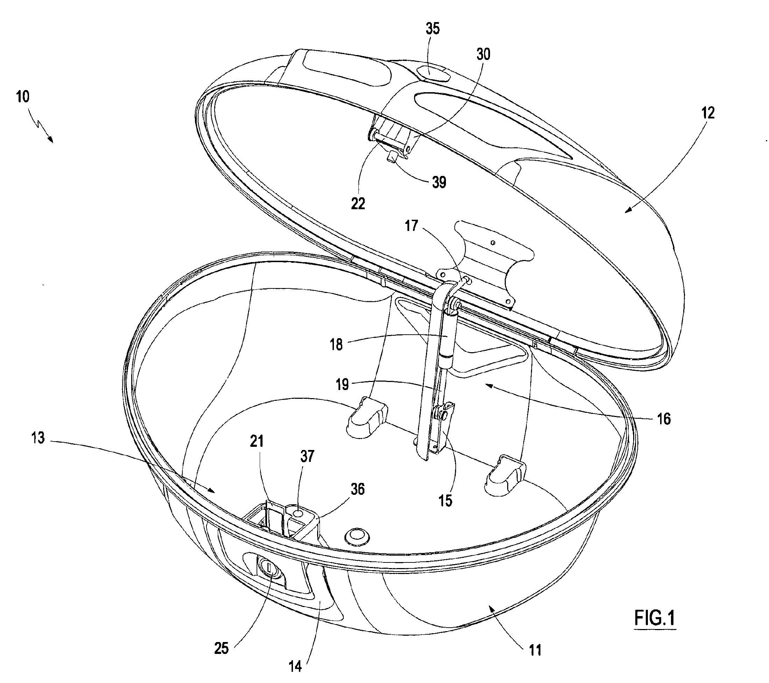

With reference to figure 1, it is pointed at as a whole with 10 a trunk for motorcycles, or similar vehicles, represented in partially opened configuration.

It comprises a lower fixed portion, 11, to which is hinged along its back side a movable upper portion, 12.

On the side opposite the hinged side you can find the locking means, 13, housed in a hollow protrusion of the fixed portion, 11, near the handle, 15, apt to carry the trunk once detached form the vehicle.

Close to the center of the back side is bound, inside said fixed portion of the trunk, a bracket, 15, apt to rotatably bind an air cylinder, 16, to the fixed portion 11. The other end of the air cylinder is also rotatably bound to a connecting element, 17, integral to the movable portion 12 of the trunk 10.

Precisely, in the shown embodiment, the external cylinder, 18, of the air cylinder is bound to the movable portion and the piston, 19 is bound to the fixed portion 11. Obviously, the opposite configuration could be provided still remaining within the ambit of protection of the present application.

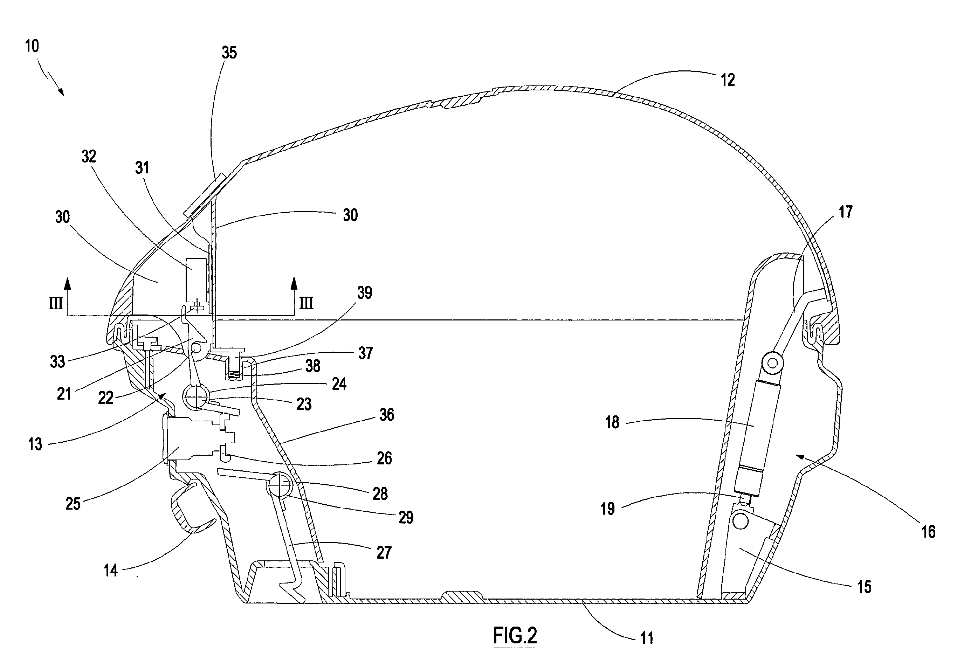

The locking means 13, clearly represented in fig.2, comprise a hook shaped lever, 21, apt to engage a pin, 22, integral to the movable portion 12, said hook shaped lever being integral, through the hinge, 23, provided with elastic means, 24, to the fixed portion 11. A lock block, 25, acted by key means, rotates the hook shaped lever 21 about the hinge 24 through a push member, 26, so disengaging the pin 22 and releasing the movable portion 12 of the trunk.

A further hook shaped lever, 27, also bound through a hinge, 28, provided with elastic means, 29, to the fixed portion 11, is rotated by the same lock block 25 to disengage the fixed portion of the trunk from binding means of the rear racks of the vehicle, not shown in figure.

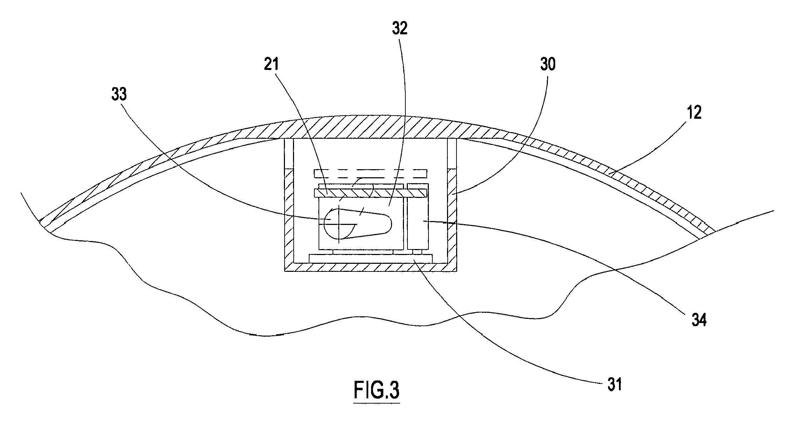

In the movable portion 12, to a frame, 30, supporting the pin 22 are bound an electronic unit, 31, an electric actuator, 32, whose rotary shaft mounts a cam, 33, better shown in the detailed view of fig.3, and power supply means, 34, supplying the actuator 32 and the electronic unit 31. A metallic plate, 35, bound to the external surface of the movable portion 12 of the trunk is connected to the electronic unit 11.

A carter, 36, located in the fixed potion 11 to protect the locking means 13, comprises on its top surface a seat, 38, for housing elastic means, 38, apt to act between their seat 37 and a protruding element, 39, integral to the frame 30 and then also to the movable portion 12 of the trunk.

The trunk provided with the above disclosed auxiliary means is operated in a very simple and effective way, in particular with respect to the opening and closing procedures.

The opening procedure can be performed, according to the known technique, upon clockwise rotation of the key inserted in the lock block 25 which moves the push member 26 rotating the hook shaped lever 21 which disengage the pin 22.

Then the elastic means 38, which are compressed, move upwards the protruding element 39 so causing a slight rotation of the movable portion 12, rotation that is enough to prevent the hook shaped lever 21 engage the pin 22 even if the key is moved back to its initial position.

Then the air cylinder 16 activates and lifts the movable portion 12 and firmly keeps it open.

It is important to point out that the elastic means 38 are not needed if the air cylinder 16 is set to immediately push upwards the movable portion when the pin 22 is disengaged. On the contrary, a weaker setting of the air cylinder could be set in order to produce the lifting of the movable portion not only after the operation of the elastic means 38 but after that the user has slightly pushed upwards the movable portion. Alternatively the pin 22 can be disengaged from the hook shaped lever 21 not by the lock block 25 but by the electronic unlocking means located in the movable portion of the trunk.

In this case the user has only to perform a contact with the metallic plate 35 on the external surface of the trunk that sends an electric signal to the electronic unit 31 which, upon verification of access permission, activates the actuator that rotates the cam 33 which push the top end of the hook shaped lever 21 and then disengages the pin 22.

The way of enabling the unlock procedure by the electronic unit 31 are not object of the present application as disclosed in detail in the previously cited application n° MI2006A001465. Nevertheless it is important to underline the relevant advantages descending from the use of the above access right control system, as, the electronic unit 31 interacting, through the plate 35, with an electronic key worn by the user, or simply near the trunk, it is just needed a contact of any type of the user itself with the plate 35, also with clothes interposed, to cause the locking means 13 of the trunk to disengage. Furthermore, the value of the contact force needed to enable the opening procedure can be adjusted so that a very light touch or a more strong touch could be needed. In this way, for instance, the user is able to activate the trunk opening procedure even with both hands hampered by different items, just touching the plate 35 with any part of his body. In addiction, even if the electronic key is unintentionally left inside the trunk, the proximity of the key with the electronic unit 31 produces the activation of the auxiliary unlocking means when an external contact with the plate 35 is performed. What is more, with the disclosed system, the electronic key is enabled to communicate with the electronic unit upon a very reliable and effective access right control.

Few seconds after having performed the unlock procedure the electronic unit 31 operates the actuator 32 to bring back the cam 33 to its initial position, so allowing the trunk, or bag, to be closed. Such a function is specifically useful when the trunk is not equipped with the elastic means 38 since, if the contact with the plate 35 unintentionally occurs, and the opening of the trunk, or saddle bag, is not demanded, the return of the cam 33 to its initial position causes the return to the trunk locked configuration.

Furthermore, the actuator 32 is equipped with a small encoder through which the angular position of the cam 33 is continuously known. Thanks to the encoder the locking auxiliary device keeps working correctly even if, upon intentional or unintentional hits or collisions, the cam rotates to undesired angular position.

The trunk can be closed, obviously, in a very simple way by moving downwards the movable portion 12, overcoming the light push of the air cylinder 16, until the movable portion gets in contact with the fixed portion 11 and the hook shaped lever 21 engages the pin 22.

The above description of the invention makes clear that the aimed objects are attained in a simple, effective and advantageous way.

It is also clear that the advantages of a trunk, or bag, according to the invention for motorcycles and the like remain valid even for different embodiments or modifications to what above disclosed.

In particular the unlocking auxiliary means comprising the electronic unit 31, the actuator 32 and the cam 33 could be used alone or together with the air cylinder 16.

The elastic means 38 could be mounted in any region where they are able to act between the fixed portion 11 and the movable portion 12, and they could also be removed in different embodiments of the trunk, or bag.

The air cylinder 16 could differ with respect to number and type of elements, and they could be replaced with a different type of elastic means as well.

The auxiliary electronic key unlocking means could be formed, assembled and arranged in a different way, specifically with respect to the actuator 32 and the cam 33, that could be replaced with a different movable element, still in view and with the function of interacting with the engaging means of the two portions of the trunk, or bag. The plate 35 as well could be differently dimensioned and shaped. For instance, it could be formed in the surface, directly by molding of one of the two portions, or it could be bound to the internal surface of the trunk, or bag.

The electronic unit 31 could be operated to disengage the locking means by a remote control emitting radio waves, infrared signals or other signals.

Finally, several safety systems could be provided in order to prevent unintentional or unauthorized opening of the trunk, or bag. Specifically, it is possible to provide the trunk with a sensor apt to determine the angular position of the movable portion of the trunk itself, apt to prevent the operation of the electronic unlocking means when the movable portion is not in a substantially horizontal position. The unlocking means could also be provided with a timer apt to postpone their enabling when the movable portion comes back to a substantially horizontal position. In addiction, safety means apt to prevent the operation of the unlocking procedure when the vehicle's engine is running.

These and other changes could take place still remaining within the ambit of protection defined by the following claims.

## Claims

1. Locking means for trunks or bags for motorcycles, or similar vehicles, comprising engage means (13) apt to couple a movable portion (12) of said trunk to a fixed portion (11), and disengaging means apt to disengage said engage means **characterized in that** they comprise at least an electronic unit (31) apt to control the operation of said disengaging means.

2. Locking means according to the previous claim **characterized in that** the operation of said disengaging means occurs upon the execution of an access right check procedure taking place when said electronic unit (31) detects contacts of specific external entities with a determined portion of the external surface of said trunk.

3. Locking means according to the previous claim **characterized in that** the operation of said disengaging means occurs when the push force exerted on said portion of the external surface is higher then a determined value.

4. Locking means according to the previous claim **characterized in that** the operation of said disengaging means occurs when said electronic unit (31) detects contacts with a plate (35) connected to said electronic unit, said contacts being performed by a user wearing an electronic key, or when said electronic key is within a range of about 1 meter from said electronic unit (31).

5. Locking means according to any one of the previous claims **characterized in that** said electronic unit (31) is apt to receive signals for operating said disengaging means from a remote control emitting radio, or infrared waves or other kind of signals.

6. Locking means according to any one of the previous claims **characterized in that** they comprise a key lock block (25) apt to disengage said engage means.

7. Locking means according to any one of the previous claims **characterized in that** said disengage means comprise an electric actuator (32) apt to operate a cam (33), or different movable element, which acts upon said engage means (21) to disengage them.

8. Locking means according to any one of the previous claims **characterized in that** electric actuator (32) is equipped with an encoder apt to determine the angular position of said cam (33)

9. Locking means according to any one of the previous claims **characterized in that** they comprise a sensor apt to detect the angular position, referred to a horizontal position, of the movable portion (12).

10. Trunk, or bag, for motorcycles or similar vehicles, of the type in which a movable portion (12) is bound to a fixed portion (11) by hinge means on one side and locking means at the opposite side, **characterized in that** it comprises locking means according to any preceding claim.

11. Trunk, or bag, according to the previous claim, **characterized in that** it comprises means apt to detect that the engine of the vehicle is running, said unlocking means for disengaging said engage means being disabled when the engine is running.

12. Trunk, or bag, according to claim 10 or 11 **characterized in that** it comprises a seat (37) for housing, supporting or binding elastic means, and elastic means (38), said seat (37) being integral to one of the two portions (11, 12) of the trunk, said elastic means (38) acting between said two portions (11, 12) in order to produce, when said engage means (13) are disengaged, a slight separation of said movable portion (12) from said fixed portion (11) through rotation about said hinge means.

13. Trunk, or bag, according to claim 10 or followings **characterized in that** it comprises elastic means (16 and/or 38) placed between said fixed portion (11) and said movable portion (12) and apt to lift said movable portion (12) when said locking means are disengaged and also apt to keep said movable portion (12) lifted.

14. Trunk, or bag, according to the previous claim, **characterized in that** said elastic means (16 and/or 38) provide damping means (16) for damping said lifting movement and reducing possible oscillations or vibrations.

15. Trunk, or bag, according to the previous claim **characterized in that** said elastic means (16) comprise air cylinders, hydraulic cylinders or other kind of visco-elastic elastic means.
